(19) Europäisches Patentamt

European Patent Office

Office européen des brevets

(11) EP 4 764 820 A1

(12) EUROPEAN PATENT APPLICATION

(43) Date of publication:
24.06.2026 Bulletin 2026/26

(51) International Patent Classification (IPC):
G06F 7/483 (2006.01)    G06F 7/487 (2006.01)
G06F 7/544 (2006.01)

(21) Application number: 25222255.9

(22) Date of filing: 10.12.2025

(52) Cooperative Patent Classification (CPC):
G06F 7/483; G06F 7/4876; G06F 7/5443

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 18.12.2024 FR 2414478

(71) Applicant: Kalray
38330 Montbonnot Saint Martin (FR)

(72) Inventors:
• DESRENTES, Orégane
  GRENOBLE (FR)
• DUPONT DE DINECHIN, Benoit
  GRENOBLE (FR)

(74) Representative: de Jong, Jean Jacques et al
Omnipat
610 Chemin de Fabrègues
13510 Éguilles (FR)

(54) **FLOATING-POINT OPERAND MULTIPLIER USING DECOMPOSITION OF OPERANDS INTO LOWER-PRECISION FLOATING-POINT NUMBERS**

(57)    The invention relates to a decomposition circuit (UPCK) of an incoming binary number for a binary arithmetic operator, the incoming number having an FP32 floating-point format, the decomposition circuit being hardwired to decompose the incoming number (X) into a pair of high and low components (Xh, Xl) in an internal format with a 9-bit exponent and a 12-bit significand; directly connect the bits of the significand (Xhm) of the high component respectively to a circuit providing the value of the implicit bit and to the most significant bits of the fractional mantissa of the incoming number; directly connect the bits of the significand (Xlm) of the low component respectively to the remaining bits of the fractional mantissa; assign to the exponent (Xhe) of the high component the exponent of the incoming number (X) plus 12; and assign to the exponent (Xle) of the low component the unchanged exponent of the incoming number (X).

Fig. 1

## Description

### Technical Field

The invention relates to hardware operators for processing floating-point numbers in a processor core, and more particularly to a multiplier.

### Background

Artificial intelligence technologies, particularly deep learning, are especially demanding in terms of multiplications of large matrices, which can have several hundred rows and columns. This has led to the emergence of hardware accelerators specialized in mixed-precision matrix multiplications. In mixed precision, the multiplied values are typically encoded in a 16-bit floating-point format FP16 (binary16 of the IEEE-754 standard), while the produced values are encoded in a 32-bit floating-point format FP32 (binary32 of the IEEE-754 standard).

The multiplication of large matrices is generally performed by blocks, that is, by decomposing the matrices into sub-matrices of a size adapted to the computational resources. Accelerators are thus designed to efficiently compute the products and accumulations of these sub-matrices. Such accelerators include an operator capable, in one pipeline cycle, of computing the dot product of the vectors representing a row and a column of a sub-matrix and adding the corresponding partial result to partial results accumulated during previous cycles. After a certain number of cycles, the accumulation of partial results constitutes the dot product of the vectors representing a row and a column of a complete matrix.

U.S. Patent 11,550,544 describes the principle of such an operator, capable of accumulating several products of floating-point numbers in FP16 format, namely having 1 sign bit, 5 exponent bits and 10 bits to encode the mantissa, more precisely the fractional part of the mantissa. This operator implements the Kulisch technique to perform accumulation exactly with correct rounding by using an internal 80-bit fixed-point representation corresponding to the dynamic range of the exponents of the products of FP16 numbers. In a practical application case, such an operator can comprise eight multipliers to perform in a single pipeline cycle a dot product of two vectors of 8 components.

The FP16 format and other non-standard formats sometimes used, such as TF32 ("Tensor Float") or BF16 ("Brain Float"), are sufficiently accurate in most artificial intelligence application cases, such that processor cores generally do not integrate higher-precision operators that would be underutilized. However, in the context of more traditional numerical calculations, it is desirable to keep all numbers (operands and results) in a uniform FP32 format. To avoid adding dedicated operators for this in the existing hardware, it has been proposed to decompose each number into two components and to perform in one pipeline cycle the sum of the four partial products of these components using the available lower-precision multipliers. In other words, the multiplication of two higher-precision numbers mobilizes four lower-precision multipliers to achieve the operation in one pipeline cycle.

For example, in patent application EP3800544, it is proposed to perform products of normalized FP32 numbers using a structure designed to accumulate products of numbers in a lower-precision floating-point format called FP21 (1 sign bit, 9 exponent bits and 11 fractional mantissa bits). An FP32 number has 1 sign bit, 8 exponent bits and 23 fractional mantissa bits (plus an implicit bit encoded in the exponent). Each FP32 number to be multiplied is decomposed into a high component and a low component in FP21 format.

The FP21 format conforms to the general rules applicable to floating-point numbers, namely that the 11 mantissa bits encode the fractional part of the mantissa and that the exponent is encoded as an unsigned integer or "with bias", from which a constant bias must be subtracted to obtain the applicable signed exponent.

The exponent and the 11 most significant bits of the original mantissa of the FP32 number are copied respectively into the exponent and mantissa of the high component.

The low component is obtained in the following manner. The remaining 12 least significant bits of the original mantissa are converted into a valid FP21 format by normalization taking into account the initial exponent and the offset of the bits taken from the original mantissa. The normalization makes implicit the first most significant bit at 1, so that the 12 bits taken from the original mantissa conform to an 11-bit fractional mantissa with implicit bit.

Patent application US2023004523 proposes a similar decomposition of an FP32 number into FP21 components.

These structures introduce complexities and latency due to the operations necessary to convert the 12 least significant bits of the original mantissa into a number conforming to the FP21 format (zero counting, shifting, normalization).

### Summary

There is generally provided a decomposition circuit of an incoming binary number for a binary arithmetic operator, the incoming number having a floating-point format with an exponent and a fractional mantissa, and implementing subnormal numbers with an implicit mantissa bit, the decomposition circuit being hardwired to decompose the incoming number into a pair of high and low components in an internal format of lower precision than the format of the incoming number, with an exponent having at least the number of bits of the exponent of the incoming number plus 1 and a significand having a number of bits at least equal to half the number of bits of the fractional mantissa plus 1; directly connect the bits of the significand of the high component respectively to a circuit providing the value of the implicit bit and to the most significant bits of the fractional mantissa; directly connect the bits of the significand of the low component respectively to the remaining bits of the fractional mantissa; assign to the exponent of the high component the exponent of the incoming number increased by the size of the significands of the components; and assign to the exponent of the low component the unchanged exponent of the incoming number.

The decomposition circuit may further comprise an adder receiving the exponent of the incoming number and the size of the significands of the components, and providing the exponent of the high component; and a comparator receiving the exponent of the incoming number and the binary value 0, and providing the most significant bit of the significand of the high component.

A binary arithmetic operator may comprise two inputs for two respective incoming floating-point numbers having the same format; an output for a result in the form of a floating-point number encoded in a normalized format; a decomposition circuit of the above type for each incoming number; and a floating-point arithmetic operator core providing the result and comprising at least four inputs receiving the components produced by the decomposition circuits, the arithmetic operator being configured to compute the exponent of the result by compensating for the influence of adding the size of the significands to the exponents of the high components.

The arithmetic operator core may comprise four floating-point multipliers each comprising two inputs; a multi-adder connected to provide the sum of the outputs of the multipliers as a result. The decomposition circuit is hardwired to apply each high and low component to two different inputs of the multipliers, so that each multiplier produces a different partial product of the components.

The multipliers and the multi-adder may form part of a Kulisch-type dot product operator based on an exact internal fixed-point representation of the outputs of the multipliers.

The dot product operator may be configured to operate in truncated Kulisch mode when the largest exponent of the products exceeds the capacity of the internal fixed-point representation.

The input numbers may be in normalized FP32 format, from which it results that the high and low components have 9 exponent bits and 12 significand bits; the products of the components have 10 exponent bits and 24 significand bits; the internal fixed-point representation is 80 bits; and the multi-adder provides a result in FP32 format.

There is also provided a binary arithmetic operator comprising at least four inputs for binary operands in an internal floating-point format comprising 9 exponent bits and 12 bits encoding a complete mantissa; an operator core performing in a hardwired manner an operation between the operands and producing a result encoded in a normalized floating-point format; and an exponent computation circuit for the result, configured to compensate for the influence of adding a value of 12 to the exponents of two of the operands.

The operator may comprise four floating-point multipliers each comprising two inputs for binary operands in the internal floating-point format; a multi-adder connected to provide the sum of the outputs of the multipliers as a result; and the exponent computation circuit being configured to subtract the value 24 from the exponent computed for the result.

**Brief Description of the Drawings**

Embodiments will be exposed in the following description provided for exemplary purposes only, in relation to the appended drawings, in which:

Figure 1 schematically represents a decomposition circuit of an FP32 number into two components, according to an embodiment;
Figure 2 is a schematic diagram illustrating the computation of a sum of partial products of two multiplicands from decompositions according to Figure 1; and
Figure 3 is a block diagram of a multiplier of two FP32 multiplicands using two decomposition circuits and a dot product operator.

**Detailed Description**

A structure is proposed below for decomposing an FP32 number into high and low components according to an internal floating-point format obtained by direct hardwiring and which can be processed by existing operators for numbers in FP16 or BF16 format with a low-complexity modification. By way of example, reference is made to the dot product operator of U.S. Patent 11,550,544.

The internal format corresponds to a format in which the implicit bit of the mantissa of a number in a floating-point format following the standards is made explicit, forming a complete mantissa or significand. With such an internal format, there is no longer an implicit bit or an underlying notion of "normal" or "subnormal" number. The exponent indicates the position of the decimal point while allowing the bit of the significand before the decimal point to be 0. This does not affect subsequent calculations which are performed separately on the exponents and significands. Thus, normalization of the low component becomes unnecessary.

For FP32 numbers, the internal format corresponds to the FP21 format described in the previously mentioned patent applications, after an "unpacking" operation consisting notably of making the implicit bit explicit. This internal format is denoted E9S12, defining a 9-bit exponent and a 12-bit significand. The sign bit, necessarily present, is not indicated by this notation.

The high and low components in E9S12 format can be applied to any operator designed to process FP21 numbers downstream of the unpacking stage of the operator. In fact, the unpacking stage of the existing operator can be swapped with the decomposition stage described here, and the swap may be performed in response to a selection of operating mode (e.g., "FP16/BF16 mode" or "FP32 mode"). The E9S12 format is relatively universal in that it allows the same operator to process FP16, BF16 and TF32 numbers, formats of lower precision than FP32 and commonly used for artificial intelligence.

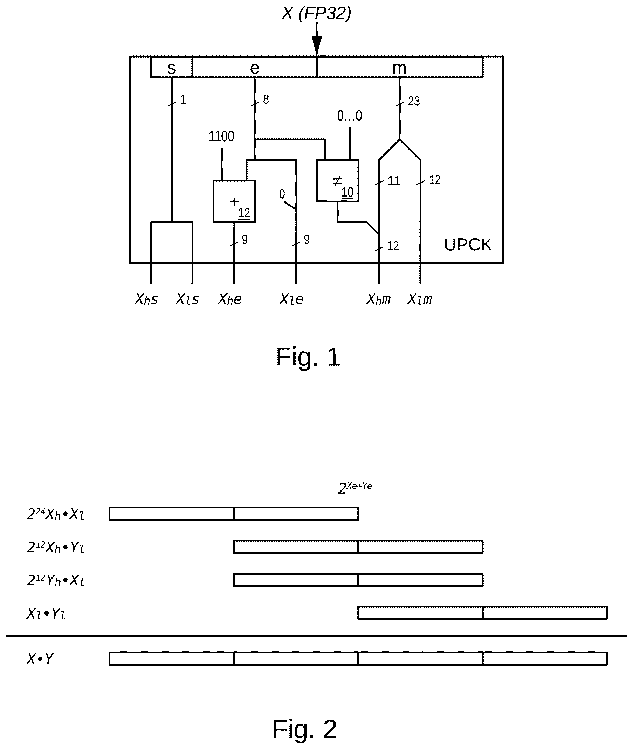

Figure 1 schematically represents a decomposition circuit UPCK of an FP32 number X, performing the desired decomposition, according to an embodiment.

The input number X is decomposed into a pair of high and low floating-point components $X_h$, $X_l$. These components are in the internal format E9S 12 comprising a sign bit $X_hs$, $X_ls$, 9 exponent bits $X_he$, $X_le$ and 12 significand bits $X_hm$, $X_lm$. According to a general rule applicable to other conceivable formats of the input numbers, the size of the exponent of the internal format is equal to that of the exponent of the input number plus 1 and the significand has a number of bits equal to half the number of bits of the significand of the input number, rounded to the next integer. In other words, the concatenation of the significands of the high and low components has a size at least equal to that of the significand of the input number.

The high and low components are then produced in the following manner by the UPCK circuit.

The significand $X_hm$ of the high component receives the value of the implicit bit and, by direct hardwiring, the following 11 most significant bits of the fractional mantissa $m$ of the number $X$. The value of the implicit bit is provided by a comparator 10 which receives the exponent $e$ of the number X and an 8-bit binary zero. The comparator provides a 1 in case of inequality and a 0 in case of equality. Indeed, when the exponent is equal to 0 (with bias), the number is subnormal.

The significand $X_lm$ of the low component receives by direct hardwiring the remaining 12 bits of the fractional mantissa $m$ of the number $X$.

The exponent $X_he$ of the high component receives the 8-bit exponent $e$ of the number $X$ increased by the size of the significands of the components. The exponent $X_he$ is provided, for example, by an adder 12 which receives the exponent $e$ and the value 12 in binary (1100). The additional bit of the exponent of the components is intended to take into account the increased exponent (+12) of the high component in the following operations, in case of overflow of the initial 8 exponent bits. Although the bias applicable to a 9-bit exponent is 255 ($2^{9-1} - 1$), the bias (127) of FP32 numbers is retained so as not to have to adjust the exponent copied from the number $X$. The addition of 12 to the exponent of the high component is compensated at the end of the operations, as will be explained later.

The exponent $X_le$ of the low component receives the 8-bit exponent $e$ of the number $X$ right-aligned on the 9 exponent bits, with the ninth bit being zero.

The sign bit s is copied from the number $X$ to both components.

An equivalent result could be obtained by retaining the initial exponent for the high component and subtracting the value 12 from the initial exponent for the low component. However, the biased exponent of the low component, originally intended to be an unsigned integer, becomes negative when the original biased exponent is less than 12. It is possible to handle this case, but this complicates the circuits which must be adapted to handle signed biased exponents.

Figure 2 represents an application of the decomposition circuit to a multiplication of two FP32 numbers. It illustrates the computation of a sum of partial products of pairs of high and low components obtained from two multiplicands $X$ and $Y$ in FP32 format. The principle is based on the following relationships, which take into account the extended exponent (+12) applied to the high components $X_h$ and $Y_h$:

$$[\text{Math 1}]$$
$$X \bullet Y = (2^{12}Xh + X_l)\bullet(2^{12}Y_h + Y_l)$$
$$= 2^{24}Xh\bullet Y_h + 2^{12}Xh\bullet Y_l + 2^{12}X_l\bullet Y_h + X_l\bullet Y_l$$

Figure 2 illustrates the addition of partial products from the last line above, in a relative fixed-point representation. By "relative representation," it is meant that the partial products all have the same absolute exponent which is the sum $Xe + Ye$ of the exponents of the numbers $X$ and $Y$. This absolute exponent corresponds, as represented, to the position of the most significant bit of the partial product $X_l\bullet Y_l$. The last line represents the sum obtained from the partial products, thus the

desired product $X \cdot Y$ in exact internal format.

Each partial product has a 24-bit significand, shifted by 0, 12 or 24 bits to the right according to the influence of the extended exponent of the high components involved. The result $X \cdot Y$ has a 48-bit significand, a relative exponent of 24 and an absolute exponent of $24 + Xe + Ye$.

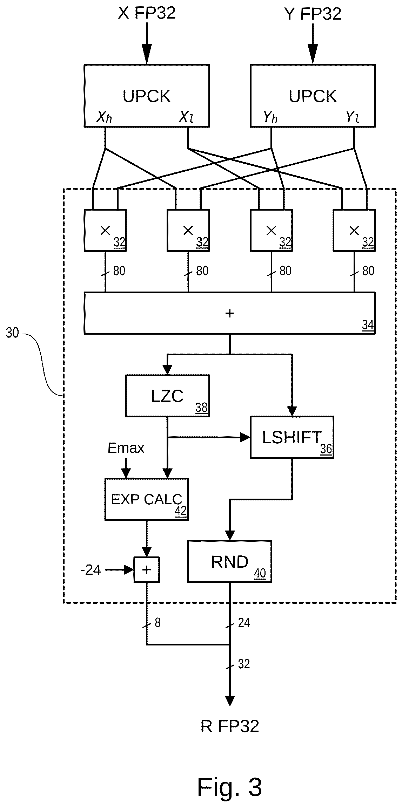

Figure 3 is a schematic diagram of a multiplier of two FP32 numbers $X$ and $Y$, using a decomposition circuit UPCK for each number and a dot product operator core 30 connected to perform the sum of the partial products. The dot product operator core comprises a bank of floating-point multipliers 32, four of which are represented, to perform the sum of the partial products. The pairs of components $(X_h, X_l)$ and $(Y_h, Y_l)$ provided by the UPCK circuits are distributed on the inputs of the four multipliers to produce the four partial products.

A multi-adder 34 is configured to compute the sum of the products provided by the multipliers. The sum is rounded and normalized to provide the result $R$ in a standardized floating-point format, for example FP32. For this, a circuit 36 shifts the sum to the left by the number of consecutive zero bits in the most significant bits of the sum. The number of zero bits LZC is provided by a circuit 38 which analyzes the bits of the sum. The shifted sum is provided to a rounding circuit 40 to produce the 23 bits of fractional mantissa and the sign bit of the result in FP32 format. The 8 exponent bits of the result are computed in parallel by a circuit 42 which receives the maximum exponent Emax of the exponents of the products and the number of zero bits LZC.

These rounding and normalization operations are conventional and will not be described in more detail. However, as previously indicated, the addition of the value 12 to the exponent of the high components is compensated at this stage. This compensation may take place, as illustrated, by subtracting the value 24 from the exponent computed by the circuit 42, the value 24 corresponding to the influence on the final exponent of the product of the two high components.

The operator core 30 may be based on the Kulisch-type structure described in U.S. Patent 11,550,544. In this case, the product provided by each of the multipliers 32 is encoded in an 80-bit fixed-point format, adapted to FP16 format multiplicands, having 1 sign bit, 5 exponent bits and 10 fractional mantissa bits. The size of 80 for the fixed-point format is in principle adapted to the results provided by the multipliers, comprising 1 sign bit, 6 exponent bits and 22 significand bits.

As previously indicated, the products of the components of the FP32 numbers to be multiplied have 1 sign bit, 9 exponent bits, and 24 significand bits, requiring a dynamic range and precision in principle greater than those of a product of FP16 numbers.

A relatively simple modification with low silicon surface cost can be made to the Kulisch operator of U.S. Patent 11,550,544 to adapt it to the desired operations while benefiting for the result R in FP32 format having a rounding that is precise systematically and correct in many cases. It suffices to add two precision bits to the integer multipliers integrated in the floating-point multipliers 32 and to adapt the alignment circuits associated with the internal 80-bit representation to handle 9-bit exponents instead of 6-bit ones.

It should be noted that the 9th exponent bit of the components has been added to compensate for a possible overflow caused by the addition of 12 to the original 8-bit exponent. The product of the components in principle has a 10-bit exponent to encode the sum of the 9-bit exponents. However, the 10 bits only encode the overflows caused by adding the value 24 to the sum of the original 8-bit exponents, so that the dynamic range is barely greater than that of an exponent encoded on 9 bits.

The multi-adder 34, designed to add 80-bit integers, remains unchanged.

The introduction of a 9-bit exponent instead of 6-bit one in this structure leads to special cases when the largest exponent of the products to be added exceeds +30 (the maximum exponent of a product of FP16 numbers) or is less than -28 (the minimum exponent of a product of FP16 numbers). In this case, according to one possibility, the operator is switched to an overflow mode where the internal 80-bit representation is no longer used in fixed point mode, but so that the significand of the product with the largest exponent is left-aligned in the 80-bit representation, and the resulting shift is propagated to the other products to be summed. For example, if the largest exponent is +40, the significand which would overflow by 40-30 = 10 bits to the left of the 80-bit representation, is left-aligned in the 80 bits, resulting in a shift of the "fixed" decimal point by 10 bits to the right, a shift then propagated to the other products to be summed to maintain alignment. The exponent of the final result R, being computed directly from the exponents of the products, is not affected by this arbitrary shift of the decimal point. The shift can be arbitrary as long as the different significands maintain their relative positions.

According to an alternative, to avoid dynamically detecting overflow conditions, the operator may be configured to be switched programmatically between an "FP16 computation mode" and an "FP32 computation mode," with the switching also selecting the appropriate unpacking stage. In "FP16 computation mode," the 80-bit fixed-point representation is used as originally intended. In "FP32 computation mode," the significand of the product with the largest exponent is systematically left-aligned in the 80-bit representation, as described above.

This structure results in truncation of least significant bits in cases where the largest difference in exponents of the products to be summed exceeds the capacity of the 80-bit representation. With the mantissa of the product with the largest exponent left-aligned in the 80 bits, the mantissas of products with smaller exponents may straddle the lower boundary of the 80 bits, or be entirely outside the 80 bits. This is referred to as an operation in "truncated Kulisch" mode. Truncation occurs more precisely when the maximum difference between the exponents of the products exceeds 56, namely 2(FP16 max exponent - FP16 min exponent) - (24 - 22). Despite the truncation, thanks to the fact that the final result is rounded to form an FP32 number, using up to 80 exact bits for the significand, this rounding always has the required precision. However, certain normalized flags provided by the rounding operation, guaranteeing so-called correct rounding, cannot be computed, such as the sticky bit, which accounts for any bit at 1 located beyond the bits used for rounding, notably potential bits that have overflowed to the right of the 80 bits.

These potential drawbacks related to truncation are however avoided in the sum of the partial products of the components of two FP32 numbers to be multiplied, as represented in Figure 3. Indeed, as shown in Figure 2, the partial products have mantissas that overlap by 12 bits in fixed-point representation, so that the sum of these partial products systematically forms a 48-bit mantissa, a size that fits amply within the 80-bit representation to operate exactly internally. Truncation can occur only in the case where the operator is used to add two products of FP32 numbers or more. In this case, truncation can sometimes result in a lack of internal precision when the numbers are of opposite signs and the same exponent. However, in artificial intelligence calculations, such cases are rare and lead to results so small that they are generally neglected anyway.

The unpacking circuit of Figure 1 can be used in association with other types of operator cores originally intended to process numbers of lower precision than FP32, with a low-cost modification of these operators to adapt them to processing inputs in E9S12 format. Inputs in this format can receive indifferently, after corresponding unpacking, numbers in FP16 or BF16 formats, or high and low components from FP32 numbers. When the numbers are in FP32 format, the operator is further configured to compute the final exponent by compensating for the influence of adding 12 to the exponents of the high components.

One can thus modify, for example, an addition-reduction operator (or multi-adder) of at least four FP16 numbers so that it can process two FP32 operands by placing at the inputs of the adder an unpacking circuit according to Figure 1 for each FP32 number. The exponent computation circuit of the multi-adder is then further modified to subtract the value 12 from the exponent of the result.

## Claims

1. A decomposition circuit (UPCK) of an incoming binary number for a binary arithmetic operator, the incoming number having a floating-point format (FP32) with an exponent and a fractional mantissa, and implementing subnormal numbers with an implicit mantissa bit, the decomposition circuit being hardwired to:

   decompose the incoming number ($X$) into a pair of high and low components ($X_h$, $X_l$)) in an internal format of lower precision than the format of the incoming number, with an exponent having at least the number of bits (9) of the exponent of the incoming number plus 1 and a significand having a number of bits (12) at least equal to half the number of bits of the fractional mantissa plus 1;
   directly connect the bits of the significand ($X_h m$) of the high component respectively to a circuit providing the value of the implicit bit and to the most significant bits of the fractional mantissa;
   directly connect the bits of the significand ($X_l m$) of the low component respectively to the remaining bits of the fractional mantissa;
   assign to the exponent ($X_h e$) of the high component the exponent of the incoming number ($X$) increased by the size (12) of the significands of the components; and
   assign to the exponent ($X_l e$) of the low component the unchanged exponent of the incoming number ($X$).

2. The decomposition circuit according to claim 1, comprising:

   an adder (12) receiving the exponent ($e$) of the incoming number and the size of the significands of the components, and providing the exponent of the high component; and
   a comparator (10) receiving the exponent ($e$) of the incoming number and the binary value 0, and providing the most significant bit of the significand of the high component.

3. A binary arithmetic operator, comprising:

   two inputs for two respective incoming floating-point numbers ($X$, $Y$) having the same format (FP32);
   an output for a result in the form of a floating-point number encoded in a normalized format (FP32);
   a decomposition circuit (UPCK) according to claim 1 for each incoming number; and
   a floating-point arithmetic operator core (32) providing the result and comprising at least four inputs receiving the components produced by the decomposition circuits, the arithmetic operator being configured to compute the exponent of the result by compensating for the influence of adding the size of the significands to the exponents of the high components.

4. The operator according to claim 3, wherein the floating-point arithmetic operator core comprises:

four floating-point multipliers (32) each comprising two inputs;
a multi-adder (34) connected to provide the sum of the outputs of the multipliers as a result; and
the decomposition circuit (UPCK) being hardwired to apply each high and low component to two different inputs of the multipliers, so that each multiplier produces a different partial product of the components.

5. The operator according to claim 4, wherein the multipliers (32) and the multi-adder (34) form part of a Kulisch-type dot product operator based on an exact internal fixed-point representation of the outputs of the multipliers.

6. The operator according to claim 5, wherein the dot product operator is configured to operate in truncated Kulisch mode when the largest exponent of the products exceeds the capacity of the internal fixed-point representation.

7. The operator according to claim 6, wherein:

the input numbers are in standard FP32 format, whereby the high and low components have 9 exponent bits and 12 significand bits;
the products of the components have 10 exponent bits and 24 significand bits;
the internal fixed-point representation is 80 bits; and
the multi-adder (34) provides a result in FP32 format.

8. A binary arithmetic operator comprising:

at least four inputs for binary operands in an internal floating-point format comprising 9 exponent bits and 12 bits encoding a complete mantissa;
an operator core performing in a hardwired manner an operation between the operands and producing a result encoded in a standard floating-point format (FP32); and
an exponent computation circuit for the result, configured to compensate for the influence of adding a value of 12 to the exponents of two of the operands.

9. The operator according to claim 8, comprising:

four floating-point multipliers (32) each comprising two inputs for binary operands in the internal floating-point format;
a multi-adder (34) connected to provide the sum of the outputs of the multipliers as a result; and
the exponent computation circuit being configured to subtract the value 24 from the exponent computed for the result.

Fig. 1

Fig. 2

Fig. 3

Europäisches
Patentamt

European
Patent Office

Office européen
des brevets

# EUROPEAN SEARCH REPORT

**Application Number**

EP 25 22 2255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HA DONGHO ET AL: "M3XU: Achieving High-Precision and Complex Matrix Multiplication with Low-Precision MXUs", PROCEEDINGS OF THE 3RD WORKSHOP ON SERVERLESS SYSTEMS, APPLICATIONS AND METHODOLOGIES, ACMPUB27, NEW YORK, NY, USA , 17 November 2024 (2024-11-17), pages 1-16, XP059888292, DOI: 10.1109/SC41406.2024.00016 Retrieved from the Internet: URL:https://dl.acm.org/doi/10.1109/SC41406.2024.00016 [retrieved on 2025-07-28] | 8,9 | INV. G06F7/483 G06F7/487 G06F7/544 |
| A | * figure 3 * * Section IV-A * ----- | 1-7 | |
| A | EP 3 800 544 A1 (FACEBOOK INC [US]) 7 April 2021 (2021-04-07) * the whole document * ----- | 1-9 | |

TECHNICAL FIELDS
SEARCHED (IPC)

G06F

The present search report has been drawn up for all claims

| Place of search | Date of completion of the search | Examiner |
|---|---|---|
| Munich | 12 December 2025 | Winkelbauer, Andreas |

## ANNEX TO THE EUROPEAN SEARCH REPORT
## ON EUROPEAN PATENT APPLICATION NO.

EP 25 22 2255

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | Publication date | Patent family member(s) | | Publication date |
|---|---|---|---|---|---|
| EP 3800544 | A1 | 07-04-2021 | CN | 112596697 A | 02-04-2021 |
| | | | EP | 3800544 A1 | 07-04-2021 |
| | | | US | 2021103429 A1 | 08-04-2021 |
| | | | US | 2022107782 A1 | 07-04-2022 |

EPO FORM P0459

For more details about this annex : see Official Journal of the European Patent Office, No. 12/82

**REFERENCES CITED IN THE DESCRIPTION**

**Patent documents cited in the description**

- US 11550544 B
- EP 3800544 A
- US 2023004523 A